# FASCICULE DE BREVET EUROPEEN

(11) **EP 2 080 691 B1**
(45) Date de publication et mention de la délivrance du brevet: **03.07.2013**
(21) Numéro de dépôt: 09150020.7
(22) Date de dépôt: 05.01.2009
(51) Int. Cl.: B62D 25/08

(54) **Raidisseur d'ossature de véhicule automobile, ossature et procédé de fixation d'un tel raidisseur sur une ossature**
Aussteifung der Rahmenkonstruktion eines Kraftfahrzeugs, Rahmenkonstruktion und Befestigungsverfahren einer solchen Aussteifung auf der Rahmenkonstruktion
Automobile framework stiffener, framework and method for fixing such a stiffener to a framework

(30) Priorité: 21.01.2008 FR 0850369
(43) Date de publication de la demande: 22.07.2009
(73) Titulaire: PEUGEOT CITROËN AUTOMOBILES S.A., 78140 Vélizy Villacoublay (FR)
(72) Inventeur: Schmitt, Jean-Charles, 90000, BELFORT (FR); Steinmetz, Gérard, 25200, MONTBELIARD (FR); Guesney, Emmanuel, 25700, VALENTIGNEY (FR); Varlot, Damien, 90500, BEAUCOURT (FR); Poncelet, Frédéric, Raymond, 25200, MONTBELIARD (FR); Burg, Jean-Pierre, 90400, MEROUX (FR); Brosset, Jacky, 78310, MAUREPAS (FR)
(74) Mandataire: Fernandez, Francis Lionel

(56) Documents cités:
- EP-A- 1 055 587
- EP-A- 1 847 445
- DE-A1- 10 003 878
- DE-A1- 19 606 590
- DE-A1-102005 003 978
- DE-A1-102005 031 731
- JP-A- 58 188 760

## Description

La présente invention concerne d'une façon générale un procédé de fixation d'un raidisseur sur une ossature de véhicule automobile.

Plus particulièrement, la présente invention concerne une ossature arrière d'un véhicule automobile.

Les diverses parties d'ossature concourent à apporter la rigidité de l'ossature globale du véhicule et, par conséquent, du véhicule lui-même.

La conception d'une partie d'ossature, et notamment de l'ossature arrière, est fortement dépendante de l'architecture et du style du véhicule. Cela dépend du type de véhicule car certaines géométries de véhicule sont plus favorables que d'autres pour le renforcement de la rigidité de l'ossature globale.

Pour augmenter la rigidité d'une partie d'ossature, il est courant d'utiliser un raidisseur qui est soudé sur cette partie d'ossature. Un tel raidisseur est souvent sous la forme d'un corps creux. Les techniques d'assemblage par soudage couramment employées comme le soudage MIG ou par points de soudure électrique PSE pour constituer une partie d'ossature apportent, en outre, leurs contraintes d'usage. Ces techniques nécessitent, par exemple, une accessibilité non négligeable de part et d'autre de l'assemblage.

D'autre part, la fabrication du raidisseur impose des conditions de dimensions sous lesquelles il n'est pas possible de descendre. Par exemple, quand ce raidisseur est sous la forme d'un corps creux, il est fabriqué généralement par emboutissage et cette opération, du fait des rayons d'emboutissage, impose entre autres comme contrainte celle de conserver une largeur minimale pour le raidisseur.

Le cumul de l'ensemble de ces spécificités influe directement sur l'efficacité d'une partie de l'ossature à répondre à sa fonction et génère ainsi une complexité de construction qui ne favorise pas l'architecture de l'ossature. Ceci est dû principalement à l'augmentation des inerties géométriques de cette ossature. Cela a aussi des répercussions sur le style et les prestations du véhicule, notamment en ce qui concerne la masse et la visibilité offerte par ce véhicule.

Enfin, il serait souhaitable d'élaborer un raidisseur qui soit mieux adapté à sa fonction que les raidisseurs connus. Par exemple, des parties de raidisseur ne sont pas sollicitées de la même manière et il conviendrait de pouvoir répartir les épaisseurs de tôle dans les zones du raidisseur en considération des sollicitations qui sont imposées à ces zones, en augmentant l'épaisseur de tôle dans les zones les plus sollicitées ou en la diminuant dans les zones les moins sollicitées.

Le document EP1847445 montre le préambule de revendication 1 et décrit un longeron de véhicule automobile présentant deux parois s'étendant longitudinalement et formant un corps creux de forme convexe, les bords longitudinaux en vis-à-vis de ces parois étant soudés ensemble pour former ce corps creux.

Le document FR-A-2 662 134 décrit un procédé pour la mise en place de parties de bordage, par exemple sur des ailes arrière, les bordages d'ailes arrière étant liés ensemble au moyen de cordons de soudure réalisé par l'intermédiaire d'un rayon laser. Ce document ne donne aucune indication sur une forme de raidisseur et son mode de fixation sur une ossature qui n'auraient pas les inconvénients mentionnés plus haut.

La présente invention a pour but d'élaborer une partie d'ossature avec raidisseur pour un véhicule automobile, cette partie d'ossature devant présenter une bonne rigidité et le raidisseur étant élaboré pour permettre une opération de fixation facilitée avec cette partie d'ossature tout en présentant un encombrement et un poids réduits par rapport aux raidisseurs connus.

L'invention concerne un procédé de fixation d'un raidisseur sur une ossature d'une partie de véhicule automobile, le raidisseur formant un corps creux soudé à ses extrémités longitudinales sur l'ossature et comprenant deux parties indépendantes destinées à former chacune un côté longitudinal du raidisseur une fois celui-ci fixé sur l'ossature, caractérisé par les étapes suivantes :
- soudure d'une première partie du raidisseur sur l'ossature avec le bord d'accostage de cette première partie repliée vers ce qui formera l'intérieur du raidisseur,
- soudure longitudinale des deux parties de raidisseur entre elles,
- soudure du bord d'accostage de la seconde partie sur l'ossature.

Avantageusement, la soudure est faite par laser et les partiesde raidisseur peuvent être réalisées par emboutissage ou pliage.

Selon des caractéristiques additionnelles de la présente invention :
- les deux parties de raidisseur présentent une rigidité différente,
- une partie de raidisseur présente une épaisseur de tôle plus élevée que l'autre,
- la jonction des parties de raidisseur entre elles s'effectue par chevauchement des deux bords dans deux plans superposés et parallèles,
- le bord longitudinal libre des deux parties de raidisseur est plié longitudinalement afin de former une surface d'accostage pour sa soudure avec un autre élément,
- un bord d'une partie de raidisseur est plié vers l'intérieur du raidisseur tandis que le bord de l'autre partie est plié vers l'extérieur du raidisseur.

Avantageusement, le raidisseur est fixé sur celle-ci par soudure, une partie de ce raidisseur étant soudée sur l'ossature avec un bord d'accostage plié à l'intérieur du corps creux formé par ce raidisseur.

Préférentiellement, cette ossature est une ossature arrière de véhicule automobile.

Les avantages de la présente invention sont l'obtention d'une fixation facilitée du raidisseur sur l'ossature et une grande marge de sélection dans le poids, les dimensions, la forme et la rigidité des parties de ce raidisseur.

L'invention va maintenant être décrite plus en détail mais de façon non limitative en regard des figures annexées, dans lesquelles :
- la figure 1 est une représentation schématique d'une vue de face d'une ossature arrière présentant un raidisseur selon l'état de la technique,
- la figure 2 est une représentation schématique d'une coupe transversale d'un raidisseur selon l'état de la technique,
- la figure 3 est une représentation schématique d'une vue de face d'une ossature arrière présentant un raidisseur conformément à la présente invention,
- la figure 4 est une représentation schématique d'une coupe transversale d'un raidisseur selon la présente invention,
- la figure 5 est une représentation schématique d'une vue de face d'une ossature arrière montrant les cordons de soudure sur le raidisseur conformément à la présente invention,
- la figure 6 est une représentation schématique d'une vue de côté d'une ossature arrière montrant les cordons de soudure sur le raidisseur conformément à la présente invention.

Dans ce qui va suivre, la partie de l'ossature décrite est une ossature arrière de véhicule. Il est à noter que ceci n'a qu'un but d'illustration et n'est en aucun cas limitatif. La présente invention peut s'appliquer à toute partie d'ossature du véhicule, tant que cette partie présente un raidisseur.

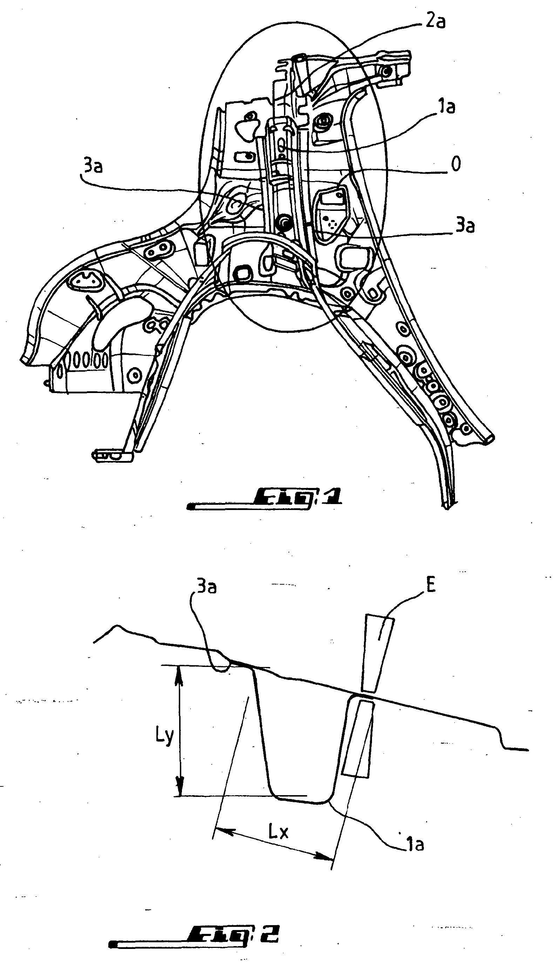

La figure 1 montre une ossature O avec un raidisseur l'assemblé sur cette ossature O selon l'état de la technique.

De manière générale, un raidisseur coopère avec l'élément de carrosserie de manière à offrir une rigidité générale améliorée et une capacité à absorber les chocs permettant la sécurité des occupants du véhicule.

Sur la figure 1, le raidisseur 1a s'étend dans la longueur de la partie de l'ossature O arrière et est raccordé avec une autre partie 2a, pouvant être un corps creux de traverse arrière de pavillon ou un autre élément de carrosserie, le raidisseur 1a et cette partie étant sensiblement orientés dans la même direction. Le raidisseur 1a s'étend sensiblement du bas de l'ossature O vers le haut de celle-ci. Les bords 3a et 4a du raidisseur 1a sont repliés vers l'extérieur de celui-ci contre la doublure de l'ossature O et forment les surfaces d'accostage.

A la figure 2, le raidisseur 1a est montré en coupe transversale. Ce raidisseur 1a a ses bords longitudinaux 3a soudées par des électrodes E sur l'ossature O. Les bords 3a sont recourbés vers l'extérieur du raidisseur 1a pour offrir l'accessibilité requise pour le dispositif de soudure. Le raidisseur 1a a sensiblement une forme de U avec une largeur minimale Lx et une longueur Ly. La largeur minimale Lx est la largeur du raidisseur 1a contrainte par la faisabilité du procédé de mise en forme, c'est-à-dire nécessitée par les contraintes de fabrication. En effet, le raidisseur 1a est réalisé par emboutissage et ce procédé de fabrication requiert une largeur minimale due aux rayons d'emboutissage.

Cela présente un inconvénient du fait que, généralement, il serait avantageux, dans la plupart des cas, de réduire cette largeur minimale. C'est par exemple le cas pour une ossature arrière, où la proximité d'une vitre de custode arrière incite à réduire la largeur Lx pour améliorer la visibilité trois quart arrière de l'habitacle.

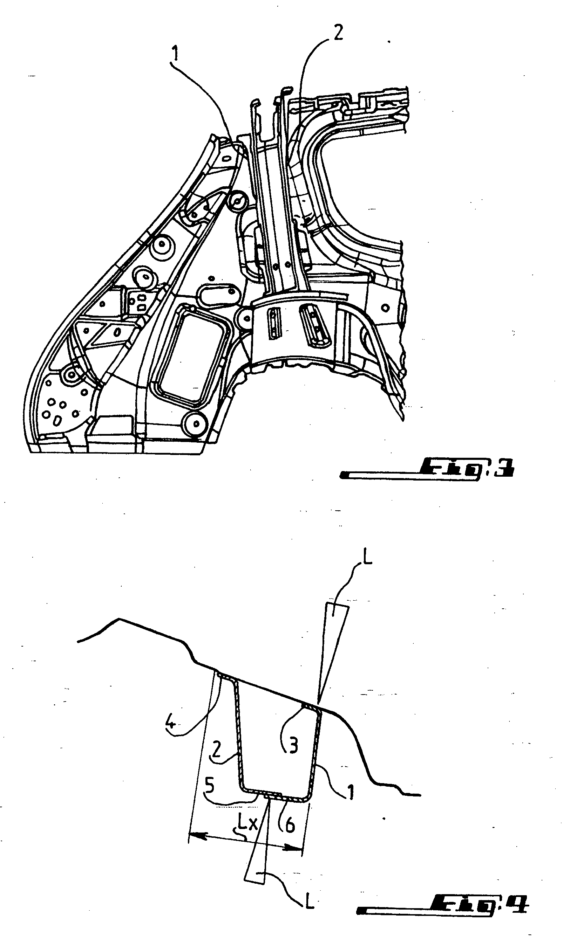

Ceci peut être possible grâce à un raidisseur selon l'invention et à sa technique d'assemblage sur l'ossature O. Ceci est illustré aux figures 3 et 4 qui montrent respectivement une vue de face d'une ossature arrière présentant un raidisseur conformément à la présente invention et une coupe transversale de ce raidisseur.

Le raidisseur selon l'invention est formé de deux parties longitudinales 1 et 2, les bords longitudinaux 5 et 6 en vis-à-vis de ces parties 1 et 2 étant soudées ensemble pour former ce raidisseur. Préférentiellement, ces bords 5 et 6 sont disposés parallèlement en se chevauchant au niveau de la soudure.

La soudure longitudinale des deux parties 1 et 2 du raidisseur peut être limitée à des surfaces planes quand la surface de jonction est partiellement courbée, étant donné qu'une soudure sur des surfaces planes est plus facile à réaliser.

Le bord de tôle 3 de la partie 1 du raidisseur, pour l'accostage sur l'ossature O, peut être orienté à l'intérieur de celui-ci, tandis que le bord de tôle 4 de l'autre partie 2 de raidisseur, pour l'accostage sur l'ossature O, est orienté vers l'extérieur.

Avantageusement, les parties 1 et 2 du raidisseur sont mises en forme indépendamment l'une de l'autre, ce qui requiert moins de contraintes que la fabrication des deux pièces simultanément, par exemple par emboutissage.

Le procédé de fixation du raidisseur sur l'ossature O peut être effectué selon les étapes suivantes :
- une première étape comprenant la soudure du bord d'accostage de tôle 3 de la partie 1 du raidisseur, ce bord 3 étant orienté vers l'intérieur sur l'ossature O, cette soudure étant rendue possible par l'absence de la seconde partie 2 de raidisseur en position sur cette ossature O,
- une seconde étape comprenant la soudure du bord d'accostage de tôle 4 de la partie 2 du raidisseur, ce bord 4 étant orienté vers l'extérieur sur l'ossature O,
- une troisième étape comprenant la soudure des deux parties 1 et 2 de raidisseur entre elles par chevauchement de leur bord en vis à vis.

La seconde étape et la troisième étape peuvent être inversées si nécessaire.

Les étapes de soudure sont suivies par des étapes de meulage du cordon de soudure si nécessaire.

Avantageusement, le procédé de soudure est une soudure laser. En effet, la soudure laser ne nécessite pas l'accès de part et d'autre de l'assemblage lors de l'accostage et demande moins de place que d'autres dispositifs de soudage.

En alternative, il est possible d'utiliser pour le procédé selon la présente invention une étape de soudure avec un moyen du type ASA, MIG ou MAG. Ces procédés présentent cependant l'inconvénient de chauffer plus les tôles respectives de raidisseur ou d'ossature, ce qui est spécifique à ces technologies de soudure, générant ainsi des déformations géométriques de l'assemblage qui peuvent être désavantageuses.

Il est possible aussi d'utiliser des moyens de maintien en position des parties de raidisseur lors de l'opération de soudage.

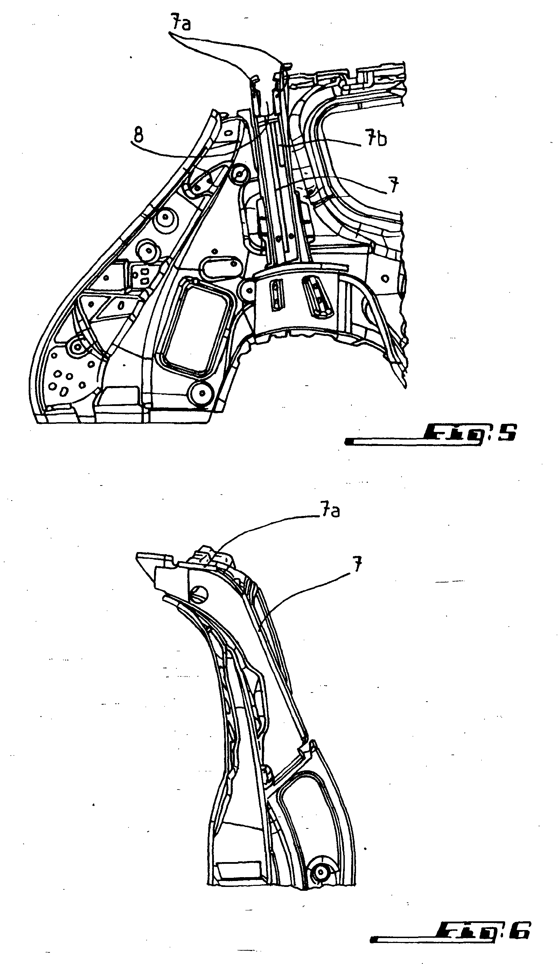

En plus de sa fixation avec l'ossature, il peut aussi être prévu des fixations de raccordement du raidisseur avec d'autres parties du véhicule pour la solidité de l'ensemble de la carrosserie. Ceci sera montré aux figures 5 et 6.

Le découpage vertical du raidisseur en deux parties 1 et 2 permet de s'affranchir des contraintes requises pour un procédé d'emboutissage, qui peut alors être remplacé, avantageusement, par un procédé de pliage de chacune des parties de raidisseur. Ceci se traduit par une réduction de la largeur Lx minimale du raidisseur, le raidisseur n'ayant plus besoin de présenter une telle largeur minimale requise par le procédé d'emboutissage.

La surface 5 de soudure d'assemblage des raidisseurs 1 et 2 est constituée par le chevauchement des deux bords longitudinaux en vis-à-vis des première et deuxième parties 1 et 2 de raidisseur, ces bords longitudinaux étant superposés et maintenus parallèles dans deux plans afin de faciliter le procédé de soudure.

Les deux parties de raidisseur peuvent ne pas être sollicitées de la même manière et n'ont pas forcément besoin de présenter la même rigidité.

Avantageusement, les deux parties de raidisseur présentent une épaisseur différente, la partie de raidisseur 1 présentant une épaisseur plus grande que l'autre partie de raidisseur 2.

Les figures 5 et 6 illustrent les divers cordons de soudure de fixation du raidisseur selon l'invention.

Le cordon de soudure 7 est celui de la soudure des deux parties 1 et 2 de raidisseur entre elles, tandis que le cordon de soudure 7b est celui de la fixation sur l'ossature O et les cordons de soudure 7a ceux de fixation avec un élément externe, par exemple un corps creux formant traverse arrière de pavillon. Pour favoriser l'alignement du corps creux formé par le raidisseur par rapport à ce corps creux de traverse arrière de pavillon, le raidisseur comprend à son extrémité tournée vers cette traverse un évidement de réception 8, où se loge cette traverse arrière. Cet évidement est délimité de chaque côté par un bras porté respectivement par la partie 1 et la partie 2 du raidisseur sur lesquels se font les soudures 7a d'accostage du raidisseur avec la traverse.

Ainsi, une telle conception de raidisseur avec des parties d'épaisseurs différentes présente l'intérêt de pouvoir répartir les épaisseurs de tôle au juste nécessaire en considération de la rigidité de l'ossature du véhicule. En effet, comme précédemment indiqué, étant donné que l'influence sur l'ossature O de la raideur de la partie de raidisseur 1 est supérieure à celle de la partie de raidisseur 2, cela permet de réduire l'épaisseur de cette dernière et présente un gain de poids et de matière utilisée pour la fabrication de la partie 2 du raidisseur.

Le raidisseur peut faire avantageusement appel aux métaux à très haute limite élastique, par exemple avec une limite élastique supérieure à 1.000 MPa. Ceci permet une capacité à l'étirement améliorée avant déformation définitive par rapport aux tôles sans traitement.

Il peut être envisagé de concevoir un raidisseur avec deux parties selon la présente invention en étant préférentiellement fabriquées avec des métaux de limites élastiques différentes.

Un des avantages de la présente invention est de conserver les cotes de longueur maximale et de largeur minimale tout en favorisant l'alignement du corps creux formé par le raidisseur par rapport au corps creux de traverse arrière de pavillon.

Ainsi, la présente invention permet d'obtenir un gain de masse par la constitution en deux parties du raidisseur avec une réduction de sa largeur et une réduction possible de l'épaisseur d'une partie du raidisseur.

Un tel raidisseur, rendu plus compact, peut procurer un gain de visibilité trois quart arrière d'environ 30 mm et un gain de masse pouvant atteindre 3kg en ossature arrière droite et gauche.

De plus, la simplicité des formes des parties de raidisseur favorise la mise en forme et la qualité des accostages.

L'invention n'est nullement limitée au mode de réalisation décrit et illustré qui n'a été donné qu'à titre d'exemple.

## Revendications

1. Procédé de fixation d'un raidisseur sur une ossature (0) d'une partie de véhicule automobile, le raidisseur formant un corps creux soudé à ses extrémités longitudinales (3, 4) sur l'ossature (0) et comprenant deux parties (1 et 2) indépendantes destinées à former chacune un côté longitudinal du raidisseur une fois celui-ci fixé sur l'ossature (0), **caractérisé par** les étapes suivantes :
- soudure d'une première partie (1) du raidisseur sur l'ossature (0) avec le bord (3) d'accostage de cette première partie (1) repliée vers ce qui formera l'intérieur du raidisseur,
- soudure longitudinale des deux parties (1 et 2) de raidisseur entre elles,
- soudure du bord d'accostage (4) de la seconde partie (2) sur l'ossature (0).

2. Procédé selon la revendication 1, **caractérisé en ce que** la soudure est faite par laser.

3. Procédé selon la revendication 1 ou 2, **caractérisé en ce que** les parties (1 et 2) de raidisseur peuvent être réalisées par emboutissage ou pliage.

4. Procédé de fixation d'un raidisseur selon l'une quelconque des revendications précédentes, **caractérisé en ce que** les deux parties (1 et 2) de raidisseur présentent une rigidité différente.

5. Procédé de fixation d'un raidisseur selon la revendication 4, **caractérisé en ce qu'**une partie (1) de raidisseur présente une épaisseur de tôle plus élevée que l'autre (2).

6. Procédé de fixation d'un raidisseur selon l'une quelconque des revendications précédentes, **caractérisé en ce que** la jonction des parties (1 et 2) de raidisseur entre elles s'effectue par chevauchement des deux bords (5, 6) dans deux plans superposés et parallèles.

7. Procédé de fixation d'un raidisseur selon l'une quelconque des revendications précédentes, **caractérisé en ce que** le bord longitudinal (3, 4) libre des deux parties (1 et 2) de raidisseur est plié afin de former une surface d'accostage pour sa soudure avec un élément support (0).

8. Procédé de fixation d'un raidisseur selon la revendication 7, **caractérisé en ce qu'**un bord (3) d'une partie de raidisseur (1) est plié vers l'intérieur du raidisseur tandis que le bord (4) de l'autre partie (2) est plié vers l'extérieur du raidisseur.

9. Procédé de fixation d'un raidisseur selon l'une quelconque des revendications précédentes, **caractérisée en ce que** ladite ossature (0) est une ossature arrière de véhicule automobile.

## Patentansprüche

1. Verfahren zum Befestigen einer Aussteifung auf einer Rahmenkonstruktion (0) eines Kraftfahrzeugteils, wobei die Aussteifung einen Hohlkörper bildet, der an seinen Längsenden (3, 4) auf die Rahmenkonstruktion (0) geschweißt ist und zwei unabhängige Teile (1 und 2) aufweist, die dazu bestimmt sind, jeweils eine Längsseite der Aussteifung zu bilden, nachdem diese auf der Rahmenkonstruktion (0) befestigt wurde, **gekennzeichnet durch** die folgenden Schritte:
- Schweißen eines ersten Teils (1) der Aussteifung auf der Rahmenkonstruktion (0) mit dem Andockrand (3) dieses ersten Teils (1) zu dem zurückgefaltet, was das Innere der Aussteifung bilden wird,
- Längsschweißen dieser zwei Aussteifungsteile (1 und 2) untereinander,
- Schweißen des Andockrands (4) des zweiten Teils (2) auf die Rahmenkonstruktion (0).

2. Verfahren nach Anspruch 1, **dadurch gekennzeichnet, dass** die Schweißung durch Laser erfolgt.

3. Verfahren nach Anspruch 1 oder 2, **dadurch gekennzeichnet, dass** die Aussteifungsteile (1 und 2) durch Stanzen oder Falten hergestellt werden können.

4. Verfahren zum Befestigen einer Aussteifung nach einem der vorhergehenden Ansprüche, **dadurch gekennzeichnet, dass** die zwei Aussteifungsteile (1 und 2) eine unterschiedliche Starrheit aufweisen.

5. Verfahren zum Befestigen einer Aussteifung nach Anspruch 4, **dadurch gekennzeichnet, dass** ein Aussteifungsteil (1) eine Blechstärke aufweist, die größer ist als die des anderen (2).

6. Verfahren zum Befestigen einer Aussteifung nach einem der vorhergehenden Ansprüche, **dadurch gekennzeichnet, dass** die Verbindung der Aussteifungsteile (1 und 2) untereinander durch Überlagern der zwei Ränder (5, 6) in zwei übereinander liegenden und parallelen Ebenen erfolgt.

7. Verfahren zum Befestigen einer Aussteifung nach einem der vorhergehenden Ansprüche, **dadurch gekennzeichnet, dass** der freie Längsrand (3, 4) der zwei Aussteifungsteile (1 und 2) gefaltet ist, um eine Andockoberfläche zu seinem Schweißen mit einem Tragelement (0) zu bilden.

8. Verfahren zum Befestigen einer Aussteifung nach Anspruch 7, **dadurch gekennzeichnet, dass** ein Rand (3) eines Aussteifungsteils (1) zum Inneren der Aussteifung gefaltet ist, während der Rand (4) des anderen Teils (2) zur Außenseite der Aussteifung gefaltet ist.

9. Verfahren zum Befestigen einer Aussteifung nach einem der vorhergehenden Ansprüche, **dadurch gekennzeichnet, dass** die Rahmenkonstruktion (0) eine Heckrahmenkonstruktion eines Kraftfahrzeugs ist.

## Claims

1. A method for fixing a stiffener to a framework (0) of a part of an automobile, the stiffener forming a hollow body welded at its longitudinal ends (3, 4) on the framework (0) and including two independent parts (1 and 2) intended to each form a longitudinal side of the stiffener once the latter is fixed on the framework (0), **characterized by** the following steps:
- welding of a first part (1) of the stiffener on the framework (0) with the mating edge (3) of this first part (1) folded towards what will form the interior of the stiffener,
- longitudinal welding of the two parts (1 and 2) of the stiffener with one another,
- welding of the mating edge (4) of the second part (2) on the framework (0).

2. The method according to Claim 1, **characterized in that** the welding is carried out by laser.

3. The method according to Claim 1 or 2, **characterized in that** the parts (1 and 2) of the stiffener can be realized by stamping or bending.

4. The method for fixing a stiffener according to any one of the preceding claims, **characterized in that** the two parts (1 and 2) of the stiffener have a different rigidity.

5. The method for fixing a stiffener according to Claim 4, **characterized in that** a part (1) of the stiffener has a greater sheet thickness than the other part (2).

6. The method for fixing a stiffener according to any one of the preceding claims, **characterized in that** the junction of the parts (1 and 2) of the stiffener with one another is carried out by overlapping of the two edges (5, 6) in two superimposed and parallel planes.

7. The method for fixing a stiffener according to any one of the preceding claims, **characterized in that** the free longitudinal edge (3, 4) of the two parts (1 and 2) of the stiffener is bent so as to form a mating surface for its welding with a support element (0).

8. The method for fixing a stiffener according to Claim 7, **characterized in that** an edge (3) of a stiffener part (1) is bent towards the interior of the stiffener, whilst the edge (4) of the other part (2) is bent towards the exterior of the stiffener.

9. The method for fixing a stiffener according to any one of the preceding claims, **characterized in that** the said framework (0) is a rear framework of an automobile.
